# EUROPEAN PATENT APPLICATION

(11) **EP 4 286 432 A1**
(43) Date of publication of application: **06.12.2023**
(21) Application number: 22745666.2
(22) Date of filing: 18.01.2022
(51) Int. Cl.: C08F 290/06, C08F 2/50, B33Y 80/00, B29C 64/106, B29C 64/264, B33Y 70/00

(54) **PHOTOCURABLE RESIN COMPOSITION AND THREE-DIMENSIONAL STEREOLITHOGRAPHY PRODUCT**

(30) Priority: 01.02.2021 JP 2021014449
(71) Applicant: NAGASE CHEMTEX CORPORATION, Osaka-shi, Osaka 550-8668 (JP)
(72) Inventor: WATANABE, Koji, Tatsuno-shi, Hyogo 679-4124 (JP); INOUE, Tatsuya, Tatsuno-shi, Hyogo 679-4124 (JP)
(74) Representative: Keltie LLP
(86) International application number: PCT/JP2022/001648
(87) International publication number: WO 2022/163443

(57) **Abstract**

Provided is a photocurable resin composition including a reactive compound, and a photopolymerization initiator. A cured product of the photocurable resin composition has two or more glass transition points including a TgA and a TgB. The TgA is less than 25 °C, and the TgB is 25 °C or more. An elongation at break in accordance with ASTM D638 of the cured product of the photocurable resin composition is 130% or more, and a breaking strength in accordance with ASTM D638 of the cured product of the photocurable resin composition is 3 MPa or more.

## Description

### [Technical Field]

The present invention relates to a photocurable resin composition and a three-dimensional optical shaped object.

### [Background Art]

With advancement of shaping technologies, such as 3D printers, photocurable resin compositions suitable for optical shaping applications have been developed.

Patent Literature 1 proposes a rubber composition for three-dimensional laminate shaping containing a liquid rubber, an amine-based urethane acrylate oligomer, and a monomer, in which the total content of the amine-based urethane acrylate oligomer and the monomer is 30 parts by mass or more, relative to 100 parts by mass of the liquid rubber.

Patent Literature 2 proposes a rubber composition for three-dimensional laminate shaping containing a liquid rubber, an inorganic filler, and a trialkoxysilane having no (meth)acryloyl group.

### [Citation List]

### [Patent Literature]

Patent Literature 1: International Publication WO2019/035387
Patent Literature 2: Japanese Laid-Open Patent Publication No. 2020-44763

### [Summary of Invention]

### [Technical Problem]

In Patent Literatures 1 and 2, rubber elasticity can be imparted to the cured product, but it is difficult to ensure tough breaking strength of the cured product. Moreover, with a rubber composition containing a liquid rubber as a principal component, due to its high viscosity at room temperature, it tends to be difficult to obtain a precise three-dimensional optical shaped object.

### [Solution to Problem]

One aspect of the present invention relates to a photocurable resin composition, including: a reactive compound; and a photopolymerization initiator, wherein a cured product of the photocurable resin composition has two or more glass transition points including a TgA and a TgB, the TgA being less than 25 °C, and the TgB being 25 °C or more, an elongation at break in accordance with ASTM D638 of the cured product of the photocurable resin composition is 130% or more, and a breaking strength in accordance with ASTM D638 of the cured product of the photocurable resin composition is 3 MPa or more.

Another aspect of the present invention relates to a three-dimensional optical shaped object, including a photocured product of the above-described photocurable resin composition.

Yet another aspect of the present invention relates to a three-dimensional optical shaped object, which is a cured product of a photocurable resin composition, wherein the cured product of the photocurable resin composition has two or more glass transition points including a TgA and a TgB, the TgA being less than 25 °C, and the TgB being 25 °C or more, an elongation at break in accordance with ASTM D638 of the cured product is 130% or more, and a breaking strength in accordance with ASTM D638 of the cured product is 3 MPa or more.

### [Advantageous Effects of Invention]

The above aspects are to provide a three-dimensional optical shaped object that can have both excellent elongation at break and excellent breaking strength, and a photocurable resin composition that gives the same.

### [Brief Description of Drawing]

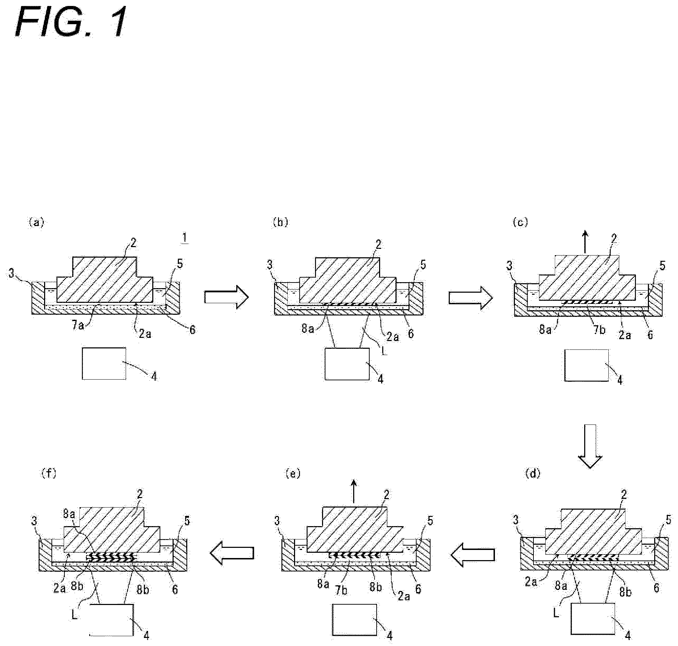

[FIG. 1] A schematic diagram for illustrating steps of forming a three-dimensional optical shaped object, using a photocurable resin composition according to one embodiment of the present invention.

### [Description of Embodiments]

While the novel features of the invention are set forth particularly in the appended claims, the invention, both as to organization and content, will be better understood and appreciated, along with other objects and features thereof, from the following detailed description taken in conjunction with the drawings.

While a photocurable resin composition according to an embodiment of the present invention will be specifically described, the following embodiment is not intended to limit the present invention, and various changes and modifications are possible.

Here, a (meth)acryloyl group means an acryloyl group or a methacryloyl group, or both. Likewise, a (meth)acrylic acid ester (or (meth)acrylate) means an acrylic acid ester (or acrylate) or a methacrylic acid ester (or methacrylate), or both. Likewise, "(meth)acrylic" means "acrylic" or "methacrylic", or both.

A three-dimensional optical shaped object is a cured product formed by three-dimensional optical shaping (or three-dimensional laminate shaping). Hereinafter, the three-dimensional optical shaped object is sometimes simply referred to as an "optical shaped object" or a "cured product".

For the optical shaped object, depending on its application, excellent flexibility and high mechanical strength are required in some cases. In addition, for the optical shaped object with excellent flexibility, there are cases where high stretchability derived from rubber elasticity is required, and where high viscosity that highly relaxes the stress associated with deformation (hereinafter, sometimes referred to as "stress relaxation properties") is required.

An optical shaped object A can be used in any application without particular limitation, and may be used in applications that require, for example, shock absorption properties, vibration isolation properties, vibration damping properties, and the like. Specifically, it may be used in electronic devices, electric devices, medical devices, electrical appliances, robot-related products, vehicle-related products (e.g., device and component mounted in vehicle, ECU, smart key), shoes (e.g., cushion material), mats, gloves, helmets, protectors, grips (e.g., bicycle grip, pen grip), watch modules, suitcases, low-resilience materials, and the like. Here, the cushion material of shoes includes, for example, a material incorporated in an insole or a midsole of shoes. In these applications, physical properties which are stable throughout the four seasons are required. It is important to suppress the fluctuations in physical properties, like becoming soft in summer and hard in winter.

However, the flexibility and the mechanical strength usually tend to be in a trade-off relationship, and achieving both at the same time is not easy. For example, an easily stretchable material like rubber, which has high flexibility but is susceptible to rupture, is difficult to have excellent flexibility and excellent mechanical strength both at the same time. Also, different approaches are often needed when high stretchability is required and when high stress relaxation properties are required. Furthermore, in order for the photocurable resin composition that gives an optical shaped object, to exhibit excellent photocurability, a sufficiently low viscosity at room temperature is required.

A photocurable resin composition according to an embodiment of the present invention (hereinafter, sometimes referred to as a "photocurable resin composition A") and an optical shaped object formed using the same (hereinafter, sometimes referred to as an "optical shaped object A" or a "cured product A"), regardless of whether high stretchability is required or whether high stress relaxation properties are required for the cured product A, can highly satisfy both flexibility and mechanical strength. Moreover, the temperature dependence of physical properties is small, and stable physical properties are likely to be obtained throughout the four seasons. The small temperature dependence of physical properties enables to achieve stable physical properties in various areas or places. Therefore, the photocurable resin composition A and the optical shaped object A (cured product A) can be adopted to various applications including the above applications. The present invention encompasses the use of the photocurable resin composition A or the photocured product A for the above-mentioned applications (e.g., a cushion material for shoes).

The cured product means a cured product in a fully cured state. A fully cured state refers to a state in which necessary and sufficient light irradiation has been performed using a necessary and sufficient amount of photopolymerization initiator, until the polymerization reaction is saturated. The fully cured state is also a state in which the polymerization reaction will not proceed any more even if light irradiation is performed further than that. For example, when a liquid film of the photocurable resin composition having a thickness of 500 µm is irradiated with LED light, the liquid film can be fully cured. Also, for example, when a liquid film of the photocurable resin composition having a thickness of 500 µm is sandwiched between a pair of glass plates, and the liquid film is irradiated from both sides with UV light of 7 mW/cm² for 60 seconds each, the liquid film can be fully cured.

### [Optical shaped object A]

The optical shaped object A (cured product A) has two or more glass transition points including a TgA and a TgB. The TgA is less than 25 °C. The TgB is 25 ° C or more.

When the cured product A has at least a TgA and a TgB, the cured product A can have both excellent elongation at break and excellent breaking strength within the temperature range of room temperature. The temperature range of room temperature is, for example, a temperature range between the TgA and the TgB.

The cured product A having a TgA and a TgB contains a component that imparts flexibility and a component that imparts toughness to the cured product A. The component that imparts flexibility to the cured product A, at a temperature higher than the TgA, mainly imparts flexibility to the cured product A. The component that imparts toughness to the cured product A, at a temperature lower than the TgB, mainly imparts toughness to the cured product A. When the component that imparts flexibility and the component that imparts toughness are phase-separated in a well-balanced manner, the cured product A has at least a TgA and a TgB, and the properties of respective components are exerted effectively, and thus, excellent elongation at break and excellent breaking strength of the cured product A can be both achieved.

On the other hand, even though a component that imparts flexibility and a component that imparts toughness are contained, when the cured product has only one glass transition point, the mechanical strength becomes low despite excellent flexibility, or vice versa, the flexibility becomes insufficient despite excellent mechanical strength. This is because the component that imparts flexibility and the component that imparts toughness are compatibilized with each other, failing to exhibit properties of respective components in a well-balanced manner. Moreover, even though the cured product has two or more glass transition points, when those glass transition points are all lower than room temperature, the temperature dependence of physical properties of the cured product increases. Such a cured product is, for example, soft in summer, but becomes hard in winter, and the flexibility is significantly reduced.

The TgA may be -30 °C or less, may be -35 °C or less, and may be -40 °C or less. On the other hand, the TgA, for example, may be -60 °C or more, may be -50 °C or more. These lower and upper limit values can be combined in any combination. The TgA, for example, may be -60 °C or more and 25 °C or less, may be -60 °C (or -50 °C) or more and -30 °C or less, and may be -60 °C or more and -40 °C or less.

The TgB may be 30 °C or more, may be 40 °C or more, may be 50 °C or more, 60 °C or more, and may be or 70 °C or more. On the other hand, the TgB, for example, may be 250 °C or less, may be 210 °C or less, may be 150 °C or less, and may be 100 °C or less. These lower and upper limit values can be combined in any combination. The TgB, for example, may be 25 °C or more and 250 °C (or 150 °C) or less, may be 25 °C or more and 250 °C (or 150 °C) or less, may be 30 °C or more and 250 °C (or 150 °C) or less, and may be 40 °C or more and 250 °C (or 150 °C) or less, may be 50 °C or more and 250 °C (or 150 °C) or less, may be 60 °C or more and 250 °C (or 150 °C) or less, and may be 70 °C or more and 250 °C (or 150 °C) or less. In these ranges, the TgB may be 210 °C or less or 100 °C or less.

A larger difference between the TgB and the TgA (TgB - TgA = ΔTg (ΔTBA)) is considered to result in a smaller temperature dependence of physical properties of the cured product A, leading to the stability of the physical properties. Also, it is considered to result in an optimized phase separation state between the component that imparts flexibility and the component that imparts toughness, leading to well-balanced exertion of the properties of respective components. The ΔTBA is desirably 60 °C or more, may be 70 °C or more, may be 80 °C or more, may be 90 °C or more, may be 100 °C or more, may be 110 °C or more, may be 120 °C or more, and may be 130 °C or more (e.g., 200 °C or more). The ΔTBA is preferably as large as possible, and its upper limit is not particularly limited. The ΔTBA may be selected according to the desired performance. The ΔTBA may be, for example, 300 °C or less.

The glass transition point of the cured product A is a Tg measured, for example, using a commercially available DMA (dynamic mechanical analysis) instrument, with respect to the cured product A. With the cured product A set in a DMA instrument, the temperature is raised from a first predetermined temperature to a second predetermined temperature (e.g., -100 °C to +300 °C), for example, at a frequency of 1 Hz, and a temperature raising rate of 5 °C/min, and the temperature at which the tanδ reaches a top peak is determined as the Tg of the cured product A.

In the present specification, the elongation at break in accordance with ASTM D638 (hereinafter sometimes simply referred to as the "elongation at break") of the cured productA is used as an index of flexibility. The elongation at break is 130% or more, may be 140% or more or 150% or more, may be 200% or more, may be 300% or more, may be 400% or more, and may be 500% or more. By this, high flexibility of the cured product A can also be ensured. Although not particularly limited, the upper limit of the elongation at break is, for example, 1500% or less, may be 1000% or less, and may be 800% or less, in view of ensuring high mechanical strength. These lower and upper limit values can be combined in any combination. For example, the elongation at break may be 130% or more and 1500% or less (or 1000% or less), and may be 130 °C or more and 800% or less. In these ranges, the lower limit values may be replaced with the above values.

The elongation at break is measured using a test piece formed from the cured product A. As the test piece, usually, the one having a thickness of 500 µm and a width of 15 mm is used. The measurement is performed under the conditions of 23 °C, a chuck-to-chuck distance of 20 mm, and a tensile speed of 200 mm/min. A commercially available tensile tester is used for the measurement. The elongation at break is a ratio of the difference between a length L1 of the test piece at break and a length L0 of the test piece in initial stage (= L1 - L0) to L0 (= (L1 - L0) / L0 × 100 (%) ). With respect to a plurality of (e.g., five) test pieces, physical properties (elongation at break, and below-described breaking strength) are measured, and an average value is obtained for each property by averaging the measured values.

In the present specification, as an index of mechanical strength, the breaking strength in accordance with ASTM D638 (hereinafter, sometimes simply referred to as the "breaking strength") of the cured product A is used. The breaking strength of the cured product A is 3 MPa or more, may exceed 5 MPa, may be 7 MPa or more, may be 9 MPa or more, may be 10 MPa or more, and may be 15 MPa or more. By this, high mechanical strength of the cured product A can be ensured. Although not particularly limited, the upper limit of the breaking strength may be 50 MPa or less, may be 40 MPa or less, and may be 30 MPa or less, in view of the ease of ensuring high elongation at break. These lower and upper limit values can be combined in any combination. For example, the breaking strength may be 3 MPa or more and 50 MPa or less (or 40 MPa or less), and 3 MPa or more and 30 MPa or less. In these ranges, the lower limit values may be replaced with the above numerical values.

The breaking strength is measured using a test piece formed from the cured product A. As the test piece, the one similar to that used for the measurement of the elongation at break can be used. Regarding the measurement conditions, too, the same conditions as those for the elongation at break are used.

A breaking energy, which is a product obtained by multiplying a value of the breaking strength (MPa) by a value of the elongation at break (%) of the cured product A, is, for example, 950 or more, may be 1,000 or more, may be 2,000 or more or 2,200 or more, may be 5,000 or more or 6,000 or more, and may be 9,000 or more or 10,000 or more. The breaking energy may be, for example, 75,000 or less.

The storage modulus at 25 °C of the cured product A may be 500 MPa or less, may be 200 MPa or less, and may be 150 MPa or less. Such a compound is likely to have, for example, sufficient flexibility throughout summer to winter. On the other hand, the storage modulus at 25 °C, for example, may be 5 MPa or more, may be 8 MPa or more, may be 10 MPa or more, may be 20 MPa or more, and may be 40 MPa or more. These lower and upper limit values can be combined in any combination. The storage modulus at 25 °C of the cured product A, for example, may be 5 MPa or more and 500 MPa or less (or 200 MPa or less), may be 5 MPa or more and 150 MPa or less, may be 10 MPa or more and 500 MPa or less (or 200 MPa or less), and may be 10 MPa or more and 150 MPa or less. In these ranges, the lower limit values may be replaced with the above numerical values.

The absolute value (ΔE(25 - 40)) of the difference between the storage modulus at 25 °C (E(25)) of the cured product A and the storage modulus at 40 °C (E(40)) of the cured product A is preferably as small as possible, in view of improving the stability of the physical properties of the cured product A. For example, the ratio of the ΔE(25 - 40) to the E(25) (= ΔE(25 - 40) / E(25) × 100) is desirably 20% or less, may be 18% or less, may be 15% or less, and may be 10% or less.

The Shore A hardness at 23 °C of the cured product A is, for example, 100 or less. In this case, the cured product A can have higher flexibility. The Shore A hardness at 23 °C of the cured product A may be 60 or less or 50 or less, and may be 40 or less. Although not particularly limited, the lower limit of the Shore A hardness is preferably 15 or more, and may be 20 or more, in view of ensuring a certain degree of strength. These upper and lower limit values can be combined in any combination. The Shore A hardness at 23 °C of the cured productA may be, for example, 15 or more and 100 or less, and may be 20 or more and 100 or less. In these ranges, the upper limit values may be replaced with the above numerical values.

In the present specification, the Shore A hardness of the cured product (or cured product A) can be measured at 23 °C in accordance with JIS K6253:2012, using a cured product having a thickness of 4 mm or more, with a commercially available durometer, under the condition of a load of 1 kg.

The tanδ of the cured productA can be used to evaluate the stress relaxation properties of the cured product A. For example, when the tanδ exceeds 0.2, it can be seen that the stress relaxation properties are high, and when the tanδ is 0.2 or less, it can be seen that the stress relaxation properties are absent, and the cured productA has rubber elasticity. With decrease of the tanδ, the rebound resilience modulus tends to increase. The tanδ may be determined according to the desired performance. The tanδ is, for example, 0.65 or less (e.g., 0.001 or more and 0.65 or less), may be 0.35 or less (e.g., 0.008 or more or 0.01 or more and 0.35 or less), and may be 0.3 or less (e.g., 0.008 or more or 0.01 or more (e.g., 0.1 or more) and 0.3 or less).

The rebound resilience modulus at 25 °C of the cured productA is, for example, 20% or more, preferably 30% or more or 40% or more, and may be 45% or more. The higher the rebound resilience modulus is, the higher the rebound force can be, and so the force to return to the original shape is strong even when stretched like rubber or when applied with pressure. Therefore, for example, a cured product exhibiting a rebound resilience modulus of 30% or more is suitable for applications requiring high rebound force. The upper limit of the rebound resilience modulus at 25 °C of the cured product A can be selected according to its application, and is, for example, 100% or less, may be 90% or less, and may be 70% or less or 65% or less. These lower and upper limit values can be combined in any combination. The rebound resilience modulus at 25 °C of the cured product A, for example, may be 20% or more (or 30% or more) and 100% or less, and may be 45% or more (or 45% or more) and 100% or less. In these ranges, the upper limit values may be replaced with the above values.

The rebound resilience modulus is measured with a rebound resilience tester, using a test piece formed from the cured product A. As the test piece, usually, a photocured product of cylindrical shape having a diameter of 29 mm and a thickness of 12.5 mm is used. The test piece is a fully cured product obtained by light irradiation. The measurement is performed at 25 °C, in accordance with ASTM D 1054. As the rebound resilience tester, for example, a rebound resilience tester manufactured by Bareiss, Inc. is used. With respect to a plurality of (e.g., three) test pieces, the rebound resilience modulus is measured, and an average value is obtained by averaging the measured values.

### [Photocurable resin composition A]

The photocurable resin composition A is a photocurable resin composition that can be used as a material for three-dimensional optical shaping, and contains a reactive compound and a photopolymerization initiator. Therefore, the present invention encompasses the use of the photocurable resin composition A as a material for three-dimensional optical shaping and the use of the photocurable resin composition A for three-dimensional optical shaping. The reactive compound and the photopolymerization initiator are selected such that an optical shaped object A (cured product A) obtained by three-dimensional optical shaping has two or more glass transition points including a TgA and a TgB. Here, the TgA is less than 25 °C and the TgB is 25 °C or more. The reactive compound and the photopolymerization initiator are selected such that the elongation at break in accordance with ASTM D638 of the cured productA obtained by three-dimensional optical shaping is 130% or more (e.g., 150% or more), and the breaking strength in accordance with ASTM D638 is 3 MPa or more.

The "reactive" in a reactive compound (the generic term encompassing a reactive monomer and a reactive oligomer) means that a compound (e.g., monomer or oligomer) has a reactive group that participates in a curing reaction with a photopolymerization initiator. The reactive oligomer includes, at least, a repeating portion of constituent units (the number of repeating units is 2 or more), and is differentiated from the reactive monomer.

The reactive compound includes a first compound and a second compound. The first compound mainly imparts a physical property of a low Tg to the cured product A. The second compound mainly imparts a physical property of a high Tg to the cured product A. The first compound contains at least one of a first monofunctional monomer and a first oligomer. The second compound contains at least one of a second monofunctional monomer and a second oligomer. Considering the physical property balance, the reactive compound preferably contains at least one of a first monofunctional monomer and a second monofunctional monomer. When using at least a monofunctional monomer, high flexibility and stretchability of the cured product A are likely to be ensured. The monofunctional monomer also contributes to maintaining the viscosity of the photocurable resin composition A within an appropriate range.

In view of imparting excellent flexibility to the cured product A, a glass transition point Tg1 of a cured product of the first compound is, for example, 10 °C or less, may be 0 °C or less, may be -20 °C or less, may be -30 °C or less, and may be -40 °C or less. The first compound can be a mixture of multiple components.

Although not particularly limited, the lower limit of the glass transition point Tg1 of the cured product of the first compound may be -130 °C or more, in view of ensuring sufficient toughness of the cured product A.

In view of imparting excellent toughness to the cured product A, a glass transition point Tg2 of a cured product of the second compound is, for example, 50 °C or more, may be 80 °C or more, may be 90 °C or more or 100 °C or more, may be 120 °C or more, and may be 200 °C or more. The second compound can be a mixture of multiple components.

Although not particularly limited, the upper limit of the glass transition point Tg2 of the cured product of the second compound may be 280 °C or less, in view of ensuring sufficient flexibility of the cured product A.

The difference between the Tg1 and the Tg2 (ΔT21 = Tg2 - Tg1) can be reflected in the difference between the TgA and the TgB (ΔTBA). However, there may be a discrepancy (Δ(T21 - TBA)) between the ΔT21 and the ΔTBA, depending on the degree of compatibility between the first compound and the second compound. The ΔTBA has a tendency to be smaller than the ΔT21. Therefore, a Δ(T21 - TBA), which is a value obtained by subtracting the ΔTBA from the ΔT21, can take a negative value, and in this case, the absolute value is adopted. In other words, the Δ(T21 - TBA) corresponds to an absolute value of the difference between the ΔT21 and the ΔTBA. The ΔT21 is, for example, 150 °C or more, and may be 200 °C or more. The Δ(T21 - TBA) is, for example, 300 °C or less, and may be 200 °C or less. The smaller the Δ(T21 - TBA) is, the smaller the temperature dependence of physical properties of the cured product is. Such a cured product can have, for example, both flexibility and strength which are stable through summer to winter. The range of the Δ(T21 - TBA) is, for example, 100 °C or less, may be 78 °C or less, and may be 75 °C or less.

The Tg of the cured product of the first compound, like the Tg of the cured product A, is a Tg measured, for example, using a commercially available DMA, with respect to the cured product of the first compound. Similarly, the Tg of the cured product of the second compound can be measured, like the Tg of the cured product A, using a DMA, with respect to the cured product of the second compound.

The Tgs of the first and second compounds may be measured with respect to cured products respectively obtained by curing the first compound and the second compound separated from the photocurable resin composition, or may be measured with respect to cured products respectively obtained by identifying the reactive compound from the photocurable resin composition and curing the same compound (or mixture of compounds) prepared separately. The photopolymerization initiator used for measuring a Tg is selected such that 95% or more of each of the first compound and the second compound is to be cured. Usually, the Tgs of respective components constituting the first and second compounds are available from suppliers, such as manufactures. When the first and second compounds are a mixture, the Tg1 and Tg2 may be calculated as a weighted average of the Tgs weighted by the proportion by mass of each component. For example, when the first compound is a mixture of a first monofunctional monomer of Tg = X and a first oligomer of Tg = Y, given that the proportion by mass of the first monofunctional monomer in the first compound is x%, and the proportion by mass of the oligomer is y% (x + y = 100%), the Tg of the first compound may be calculated from Tg = (X·x / 100) + (Y·y / 100).

Considering the physical property balance, the mass ratio between the first compound and the second compound (= first compound / second compound) is, given that the total mass of the first compound and the second compound is 100, for example, 20/80 to 85/15, may be 20/80 to 80/20, may be 25/75 to 75/25, and may be 30/70 to 70/30.

In the photocurable resin composition A, when a reactive monomer and a reactive oligomer are used in combination, the mass ratio between the reactive monomer and the reactive oligomer (= reactive monomer / reactive oligomer) is, given that the total mass of the reactive monomer and the reactive oligomer is 100, for example, 20/80 to 80/20, may be 25/75 to 70/30, and may be 30/70 to 70/30. When the mass ratio between the reactive monomer and the reactive oligomer is in such a range, high strength of the cured product is likely to be ensured, and the flexibility can be enhanced. Furthermore, it is possible to ensure a high curing speed, while suppressing the distortion during curing. Moreover, the viscosity of the photocurable resin composition can be easily adjusted.

The photocurable resin composition A may contain at least one first monofunctional monomer whose singly cured product has a glass transition point of 10 °C or less, as the first compound, and at least one selected from the group consisting of a second monofunctional monomer whose singly cured product has a transition point of 50 °C or more and a second oligomer whose singly cured product has a transition point of 50 °C or more, as the second compound. Alternatively, the photocurable resin composition A may contain at least one second monofunctional monomer whose singly cured product has a glass transition point of 50 °C or more, as the second compound, and at least one selected from the group consisting of a first monofunctional monomer whose singly cured product has a glass transition point of 10 °C or less and a first oligomer whose singly cured product has a glass transition point of 10 °C or less, as the first compound. In this case, a cured product A having two or more glass transition points including a TgA and a TgB is likely to be obtained by three-dimensional optical shaping.

The glass transition point of a singly cured product of each of the first monofunctional monomer and the first oligomer may be 0 °C or less, may be -10 °C or less, may be -20 °C or less, may be -30 °C or less, and may be -40 °C or less. On the other hand, the Tg of a singly cured product of each of the first monofunctional monomer and the first oligomer may be, for example, -130 °C or more, may be -100 °C or more, may be -70 °C or more, and may be -65 °C or more or -60 °C or more. These lower and upper limit values can be combined in any combination. The glass transition point of a singly cured product of each of the first monofunctional monomer and the first oligomer may be, for example, -130 °C or more and 0 °C or less (or-10 °C or less), may be -130 °C or more and -20 °C or less (or -30 °C or less), and may be -130 °C or more and -40 °C or less. In these ranges, the lower limit values may be replaced with the above values.

The glass transition point of a singly cured product of each of the second monofunctional monomer and the second oligomer is 50 °C or more, but may be 70 °C or more, may be 90 °C or more, may be 110 °C or more, and may be 120 °C or more or 140 °C or more. On the other hand, the Tg of a singly cured product of each of the second monofunctional monomer and the second oligomer may be, for example, 250 °C or less, and may be 230 °C or less. These lower and upper limit values can be combined in any combination. The Tg of a singly cured product of each of the second monofunctional monomer and the second oligomer, for example, may be 50 °C or more and 250 °C or less, and may be 50 °C or more and 230 °C or less. In these ranges, the lower limit values may be replaced with the above values.

In view of ensuring high optical shaping properties, at least one of the first monofunctional monomer and the second monofunctional monomer may be an acrylic monomer, or both may be acrylic monomers. The first monofunctional monomer may be an acrylic monomer, and the second monofunctional monomer may be at least one selected from the group consisting of a vinyl-series monomer, an acrylic monomer, and a monomer having a cyclic group including a polymerizable unsaturated bond.

In view of ensuring high optical shaping properties, the first oligomer may be an acrylic oligomer. From a similar point of view, the second oligomer may be an acrylic oligomer.

The proportion of the first monofunctional monomer in the whole reactive monomer, for example, may be 80 mass% or less (or 70 mass% or less), may be 5 mass% or more or 9 mass% or more and 80 mass% or less (or 70 mass% or less), may be 20 mass% or more and 80 mass% or less, and may be 30 mass% or more and 70 mass% or less. In this case, a cured product A having two or more glass transition points including a TgA and a TgB is more likely to be obtained by three-dimensional optical shaping.

The proportion of the second monofunctional monomer in the whole reactive monomer, for example, may be 20 mass% or more (or 30 mass% or more), may be 20 mass% or more (or 30 mass% or more) and 100 mass% or less, may be 20 mass% or more (or 30 mass% or more) and 95 mass% or less, may be 20 mass% or more and 80 mass% or less, and may be 30 mass% or more and 70 mass% or less. In this case, a cured productA having two or more glass transition points including a TgA and a TgB is more likely to be obtained by three-dimensional optical shaping.

The difference (ΔdP) between a polar term dP₁ of Hansen solubility parameter (HSP) of the first compound and a polar term dP₂ of Hansen solubility parameter (HSP) of the second compound may be 5.0 MPa^{0.5} or more. When the difference (ΔdP) between the polar term dP₁ and the polar term dP₂ is set to 5.0 MPa^{0.5} or more, the compatibility between the first compound and the second compound is moderately restricted, and the phase separation state tends to be optimized. As a result, a photocurable resin composition A that gives a cured product having two or more glass transition points including a TgA and a TgB is likely to be obtained. The properties of the components derived from each of the first compound and the second compound are exhibited more effectively, and the balance between the elongation at break and the breaking strength can be more easily controlled. Furthermore, a photocurable resin composition A that gives a cured product with low temperature dependence is likely to be obtained.

The solubility parameter is a measure of the affinity between substances, and the HSP is represented by three-dimensional vectors consisting of a dispersion term dD, a polarity term dP, and a hydrogen bond term dH. When the first compound includes two or more reactive compounds, the dP₁ can be determined from the dP and the percentage by mass of each individual reactive compound. Likewise, when the second compound includes two or more reactive compounds, the dP₂ can be determined from the dP and the percentage by mass of each individual reactive compound. That is, a weighted average of the HSP (dP) values weighted by the proportion by mass of each component is calculated. When the HSP values of respective components constituting the first and second compounds are available from suppliers, such as manufactures, the available HSP values may be used.

The HSP values of the first and second compounds may be determined using the first compound and the second compound separated from the photocurable resin composition, or may be determined by identifying the reactive compound from the photocurable resin composition, using the same compound (or mixture of compounds) prepared separately.

The difference (ΔdP) between the dP₁ and the dP₂ may be 0.3 MPa^{0.5} or more, may be 1.5 MPa^{0.5} or more, may be 3.0 MPa^{0.5} or more. In view of obtaining higher elongation at break and breaking strength, the ΔdP may be 5.0 MPa^{0.5} or more, may be 6.0 MPa^{0.5} or more, and may be 7.0 MPa^{0.5}. The ΔdP is an absolute value of the difference between the dP₁ and the dP₂. The difference (ΔdP) between the dP₁ and the dP₂ is preferably 10 MPa^{0.5} or less, more preferably 8 MPa^{0.5} or less, in that a more uniform liquid photocurable resin composition A can be obtained, and the TgA and the TgB are likely to appear clearly after curing. These lower and upper limit values can be combined in any combination. The ΔdP may be 0.3 MPa^{0.5} or more and 10 MPa^{0.5} or less, may be 0.3 MPa^{0.5} or more and 8 MPa^{0.5} or less. In these ranges, the lower limit values may be replaced with the above numerical values.

The dispersion term dD, the polar term dP, and hydrogen bond term dH of each individual reactive compound can be determined using HSP calculation software HSPiP (available from official websites of HSP and HSPiP). The HSP may be calculated using HSPiP database. For the reactive compounds that do not exist in the database, the HSPs can be obtained by testing each individual reactive compound prepared separately, for its solubility in all the media shown in Table 1. In Table 1, the numerical value ratio with v/v in parenthesis indicates the mixing ratio (volume ratio) between two media. The unit of HSP value in Table 1 is MPa^{0.5}.

**[Table 1]**

| Medium | HSP | | |
|---|---|---|---|
| | dD | dP | dH |
| hexane | 14.9 | 0.0 | 0.0 |
| cyclohexane | 16.8 | 0.0 | 0.2 |
| toluene | 18.0 | 1.4 | 2.0 |
| ethanol | 15.8 | 8.8 | 19.4 |
| isopropanol/water 70/30 (v/v) | 15.7 | 9.1 | 24.2 |
| isopropanol/water 60/40 (v/v) | 15.7 | 10.1 | 26.8 |
| methanol | 14.7 | 12.3 | 22.3 |
| N-methyl-2-pyrrolidone | 18.0 | 12.3 | 7.2 |
| γ-butyrolactone/water 30/70 (v/v) | 16.3 | 16.2 | 31.8 |
| γ-butyrolactone/water 60/40 (v/v) | 18.1 | 16.4 | 21.4 |
| propylene carbonate | 20.0 | 18.0 | 4.1 |
| acetonitrile | 15.3 | 18.0 | 6.1 |
| ethylene carbonate/water 50/50 (v/v) | 16.8 | 18.9 | 23.7 |
| ethylene carbonate/water 80/20 (v/v) | 17.5 | 20.6 | 12.5 |
| glycerin carbonate/water 50/50 (v/v) | 16.7 | 20.8 | 29.9 |
| ethylene carbonate/propylene carbonate 90/10 (v/v) | 18.2 | 21.3 | 5.0 |
| glycerin carbonate/water 70/30 (v/v) | 17.2 | 22.7 | 24.9 |
| glycerin carbonate/N-methyl-2-pyrrolidone 80/20 (v/v) | 17.9 | 22.9 | 15.4 |

Specifically, the HSP of the reactive compound is determined as follows. A reactive compound is added to each medium in Table 1 at a concentration of 0.1 mass%, and stirred for 10 minutes at room temperature (e.g., 25 °C) using a roller shaker or screw tube. After stirring, the mixture is left to stand at room temperature (e.g., 25 °C) for 1 hour. When the reactive compound is precipitated, it is scored as 0, and when dispersed or dissolved, it is scored as 1. The HSP (i.e., the dispersion term dD, the polar term dP, and the hydrogen bond term dH) in each medium is plotted three-dimensionally. From the HSP distribution in the medium in which the reactive compound is dispersed or dissolved, a sphere called a Hansen solubility sphere is created, to determine a center coordinate of the sphere. With the center coordinate taken as the HSP of the reactive compound, the dispersion term dD, the polar term dP, and the hydrogen bond term dH of each individual reactive compound can be determined.

The separation of the reactive compound from the photocurable resin composition can be performed, for example, using a known separation method, such as centrifugal separation, extraction, crystallization, column chromatography, and/or recrystallization. The identification of the reactive compound can be performed, for example, by analyzing the photocurable resin composition using gas chromatography, liquid chromatography, and/or mass spectrum.

In three-dimensional optical shaping applications, the photocurable resin composition A is required to cure quickly. Forthat, it is desired that the viscosity at room temperature is sufficiently low. For example, at 25°C, the viscosity may be 10 mPa s or more and 7000 mPa s or less, may be 200 mPa s or more and 5000 mPa s or less, may be 200 mPa s or more and 3000 mPa s or less, and may be 200 mPa s or more and 2000 mPa s or less. The viscosity of the photocurable resin composition A can be measured, for example, using a cone-plate E type viscometer, at a rotation speed of 20 rpm.

### (Reactive monomer)

The first monofunctional monomer and the second monofunctional monomer (hereinafter, sometimes collectively referred to as a monofunctional monomer) are encompassed in the category of reactive monomers. The monofunctional monomer has one reactive group. The reactive compound may include, without limited to a monofunctional monomer, a polyfunctional monomer having two or more reactive groups, as a reactive monomer. As the reactive monomer, a compound that can be cured or polymerized by the action of radicals, cations, and/or anions generated by light irradiation is used.

The number of reactive groups in the polyfunctional monomer is, for example, 2 to 8, and may be 2 to 4. As the reactive monomer, at least a monofunctional monomer is preferably used, and a monofunctional monomer and a polyfunctional monomer may be used in combination. When the first compound contains a polyfunctional monomer (first polyfunctional monomer), the glass transition point of a singly cured product of the first polyfunctional monomer may be selected from the ranges of the glass transition temperature described for the singly cured product of each of the first monofunctional monomer and the first oligomer. When the second compound contains a polyfunctional monomer (second polyfunctional monomer), the glass transition point of a singly cured product of the second polyfunctional monomer may be selected from the ranges of the glass transition temperature described for the singly cured product of each of the second monofunctional monomer and the second oligomer, and may be equal to or greater than the lower limit of the above glass transition point and 300 °C or less.

When a monofunctional monomer and a polyfunctional monomer are combined, the average number of reactive groups per one molecule of the reactive monomer, for example, may be 1 to 2.5, and may be 1 to 2, and is preferably 1 to 1.5, more preferably 1 to 1.2. As the reactive monomer, a monofunctional monomer only may be used.

Examples of the reactive group include a group having a polymerizable carbon-carbon unsaturated bond, and an epoxy group. The group having a polymerizable carbon-carbon unsaturated bond includes a vinyl group, an allyl group, a dienyl group, an acryloyl group, a methacryloyl group, a cyclic group including a polymerizable carbon-carbon unsaturated bond (e.g., a hydrocarbon ring group or heterocyclic group including at least one of a vinylene group and an ethynylene group), and the like, but not limited thereto. Among the reactive groups, a radically polymerizable functional group, such as a vinyl group, an allyl group, a (meth)acryloyl group, and a cyclic group including a polymerizable carbon-carbon unsaturated bond (in particular, a (meth)acryloyl group), is preferred in that the curing speed is likely to be high, and the optical shaping properties are excellent. The hydrocarbon ring group and the heterocyclic group may be of monocyclic, may be of bridged, and may be a condensed ring group in which an aromatic hydrocarbon ring (e.g., a benzene ring) is condensed. The heterocyclic group contains, for example, as a ring-constituting heteroatom, at least one selected from the group consisting of a nitrogen atom, a sulfur atom, and an oxygen atom. The heterocyclic group may be a heterocyclic group containing at least a nitrogen atom as a ring-constituting heteroatom (e.g., a nitrogen atom-containing ring group). Such a heterocyclic group (nitrogen atom-containing ring group) may contain a nitrogen atom only, as a ring-constituting heteroatom, or may contain a nitrogen atom and another heteroatom (e.g., oxygen atom). These cyclic groups may be 4- to 12-membered, may be 4- to 10-membered, and may be 5- to 8-membered.

A cyclic group including a polymerizable carbon-carbon unsaturated bond may have a substituent on the ring. The substituent may be, for example, at least one selected from the group consisting of an alkyl group, an oxo group (=O), a hydroxy group, an alkoxy group, and an aryl group (in particular, an alkyl group, an oxo group, and an aryl group). Each of the alkyl group and the alkoxy group, for example, may have 1 to 6 carbon atoms, may have 1 to 4 carbon atoms, may have 1 to 3 carbon atoms, and may have 1 or 2 carbon atoms. The aryl group may be an aryl group having 6 to 10 carbon atoms, and may be a phenyl group.

The reactive monomer may be, for example, a vinyl-series monomer, an allylic monomer, and an acrylic monomer, a monomer having a cyclic group including a polymerizable carbon-carbon unsaturated bond, an epoxy compound, and the like. Examples of the vinyl-series monomer include a monomer having a vinyl group, for example, a vinyl ether of a hydroxy compound (e.g., a vinyl ether of a monohydric alcohol), an aromatic vinyl monomer (e.g., styrene), an alicyclic vinyl monomer, and a heterocyclic compound having a vinyl group (e.g., a nitrogen-containing cyclic compound having a vinyl group, such as N-vinylpyrrolidone and 3-vinyl-5-methyl-2-oxazolidinone). Examples of the allylic monomer includes a monomer having an allyl group, for example, an allyl ether of a hydroxy compound (e.g., an allyl ether of a monohydric alcohol). Examples of the acrylic monomer includes a monomer having a (meth)acryloyl group, for example, a (meth)acrylic acid ester of a hydroxy compound, an acid amide of a nitrogen-containing compound and a (meth)acrylic acid (e.g., an acid amide of a nitrogen-containing cyclic compound, such as acryloylmorpholine or methacryloylmorpholine, and a (meth)acrylic acid), and a (meth)acrylic acid. Here, in the nitrogen-containing cyclic compound having a vinyl group or the acid amide of a nitrogen-containing cyclic compound and a (meth)acrylic acid, the nitrogen-containing ring corresponding to the nitrogen-containing cyclic compound encompasses, for example, in addition to pyrrole, imidazoline, pyrrolidine, imidazole, piperidine, pyridine, and like, a heterocycle containing a nitrogen atom and another heteroatom (e.g., morpholine, thiazine, oxathiazine, oxazolidine, oxazolidinone). Examples of the monomer having a cyclic group including a polymerizable carbon-carbon unsaturated bond include a maleimide compound (e.g., N-phenylmaleimide).

The above-described hydroxy compound may be an aliphatic hydroxy compound, an aromatic hydroxy compound, an alicyclic hydroxy compound, or a heterocyclic hydroxy compound. The hydroxy compound may be a monohydric alcohol or a polyol. The aliphatic hydroxy compound may have an aromatic ring, an aliphatic ring, and/or a heterocyclic ring. The aliphatic ring may be a bridged ring. In the reactive monomer, when the hydroxy compound is a polyol, all the hydroxy groups may be etherified oresterified, or some of the hydroxy groups may be etherified or esterified.

The hydroxy compound may be an aliphatic alcohol, an alicyclic alcohol, an aromatic alcohol (or an aromatic hydroxy compound (including phenols)), a heterocyclic alcohol, or alkylene oxide adducts thereof. The aliphatic alcohol may have an aromatic ring, an aliphatic ring, or a heterocycle. The aliphatic ring may be a bridged ring. The number of hydroxy groups in these hydroxy compounds is one, or two or more.

Examples of the aliphatic alcohol include alkyl alcohols (e.g., alkyl alcohols, such as methanol, ethanol, propanol, isopropanol, butanol, hexanol, lauryl alcohol, and stearyl alcohol), glycol (e.g., ethylene glycol, 1,3-propanediol, 1,4-butanediol, polyalkylene glycols (diethylene glycol, dipropylene glycol, tetramethylene glycol), benzyl alcohol, phenethyl alcohol, xylylene glycol, a monoester of phthalic acid and ethylene glycol, phenoxyethyl alcohol, cyclohexanemethanol, cyclohexanedimethanol, and tricyclodecanedimethanol. The aliphatic alcohol includes, for example, C₁₋₂₀ aliphatic alcohols, and may be a C₁₋₁₀ aliphatic alcohol, or a C₁₋₆ aliphatic alcohol (or a C₁₋₄ aliphatic alcohol). The aliphatic alcohol may be a mono- or di-C₁₋₆ aliphatic alcohol (a mono- or a di-C₁₋₄ aliphatic alcohol) having a cyclic group (e.g., a hydrocarbon ring group). The hydrocarbon ring is exemplified by an aromatic hydrocarbon ring, and an alicyclic hydrocarbon ring. Such aliphatic alcohols encompass, among the above-exemplified aliphatic alcohols, benzyl alcohol, phenethyl alcohol, xylylene glycol, monoester of phthalic acid and ethylene glycol, phenoxyethyl alcohol, cyclohexanemethanol, cyclohexanedimethanol, tricyclodecanedimethanol, and the like. Examples of the alicyclic alcohol include alicyclic C₅₋₂₀ alcohols (e.g., alicyclic C₅₋₁₀ alcohol), such as cyclohexanol, menthol, borneol, isoborneol, dicyclopentanyl alcohol, and dicyclopentenyl alcohol. Examples of the aromatic alcohol include aromatic C₆₋₁₀ alcohols, such as phenol and naphthol.

Examples of the heterocyclic alcohol include alcohols having a heterocyclic group including a heteroatom as a constituent atom of the ring. Examples of the aliphatic alcohol having a heterocycle include an aliphatic alcohol having a heterocyclic group including a heteroatom as a constituent atom of the ring. These heterocyclic groups are exemplified by 4- to 8-membered heterocyclic groups, and may be a 5- or 6-membered heterocyclic group. The heterocyclic group may be an unsaturated heterocyclic group, and may be a saturated heterocyclic group. The heteroatom may be, for example, nitrogen, oxygen, and/or sulfur. Examples of the heterocycle corresponding to the heterocyclic group include oxygen-containing heterocycles (e.g., furan, tetrahydrofuran, oxolane, dioxolane, tetrahydropyran, dioxane), nitrogen-containing heterocycles (e.g., pyrrole, imidazoline, pyrrolidine, imidazole, piperidine, pyridine, isocyanuric acid), sulfur-containing heterocycles (e.g., thiophene, tetrahydrothiophene), heterocycles including plural kinds of heteroatoms (e.g., morpholine, thiazine, oxathiazine, oxazolidine, oxazolidinone). As the aliphatic alcohol having a heterocyclic group, a C₁₋₆ aliphatic alcohol having a heterocyclic group, or a C₁₋₄ aliphatic alcohol having a heterocyclic group is preferred. For example, an aliphatic alcohol containing an isocyanuric acid as a heterocyclic ring is exemplified by tris(2-hydroxyethyl) isocyanurate.

Examples of the nitrogen-containing compound that forms an acid amide with a (meth)acrylic acid include an aliphatic amine (e.g., triethylamine, ethanolamine), an alicyclic amine (e.g., cyclohexyl amine), an aromatic amine (e.g., aniline), and a nitrogen-containing cyclic compound. The nitrogen-containing cyclic compound include, for example, pyrrole, pyrrolidine, piperidine, pyrimidine, morpholine, and thiazine. The nitrogen-containing cyclic compound is preferably a 5- to 8-membered ring, and may be a 5- or 6-membered ring.

The number of oxyalkylene groups included in one molecule of the alkylene oxide adduct is, for example, 1 or more and 10 or less, and may be 1 or more and 6 or less, or 1 or more and 4 or less. The oxyalkylene group is exemplified by an oxy C₁₋₄ alkylene group (e.g., oxymethylene, oxyethylene, oxypropylene, oxytrimethylene group), and may be an oxy C₁₋₂ alkylene group or an oxy C₂₋₃ alkylene group (e.g., oxyethylene group).

Of the first reactive monomers, the epoxy compound is exemplified by a compound having an epoxy group (including, a compound having a glycidyl group). The epoxy compound may have, for example, an epoxycyclohexane ring or a 2,3-epoxypropyloxy group.

When a second compound including a nitrogen-containing monomer is used, a relatively large dP₂ is likely to be obtained, and a relatively large ΔdP is likely to be secured. Therefore, the phase separation state between the first compound and the second compound can be easily optimized. The properties of the components derived respectively from the first compound and the second compound are exhibited more effectively, and the balance between the elongation at break and the breaking strength can be more easily controlled. In particular, when the second monofunctional monomer includes a nitrogen-containing monomer, the dP₂ becomes larger and the ΔdP becomes even larger, and thus, a cured product A having an excellent balance between the elongation at break and the breaking strength is likely to be obtained. When the nitrogen-containing monomer includes a monomer having a nitrogen-containing ring, a higher TgB or Tg2 tends to be obtained, a photocurable resin composition A that gives a cured product with low temperature dependence is more likely to be obtained.

### (Reactive oligomer)

The first oligomer and the second oligomer (hereinafter sometimes collectively simply referred to as an oligomer) are encompassed in the category of reactive oligomers. The reactive oligomer may be a monofunctional oligomer having one reactive group or a polyfunctional oligomer having two or more reactive groups. As the reactive oligomer, an oligomer that can be cured or polymerized by the action of radicals, cations and/or anions generated by light irradiation is used.

The reactive groups of the reactive oligomer can be selected from those exemplified for the reactive monomers. The first oligomer may be a monofunctional oligomer having one reactive group, but in view of achieving both high strength and high flexibility, it is preferable to include a polyfunctional oligomer having two or more reactive groups. In addition, the polyfunctional oligomer acts as a cross-linker between the polymerized products of the reactive monomers, and thus, high stretchability of the cured product can be ensured. In the polyfunctional oligomer, the number (average number) of reactive groups is, for example, 2 to 8, may be 2 to 4, and may be 1.5 to 2.5.

The weight average molecular weight Mw of the oligomer is, for example, 8,000 or more, and may be 10,000 or more, and in view of ensuring high mechanical strength of the cured product, is more preferably greater than 10,000, further more preferably 11,000 or more or 13,000 or more. The Mw of the oligomer is, for example, 40,000 or less, and may be 30,000 or less. When the Mw is in the range as above, the oligomer can be more uniformly mixed with the reactive monomer, and thus, high mechanical strength can be easily secured. These lower and upper limit values can be combined in any combination.

In the present specification, the weight average molecular weight Mw is a weight average molecular weight based on polystyrene, as measured using gel permeation chromatography (GPC).

The Mw of the oligomer can be determined, for example, by the following procedures.

The oligomer is dissolved in a solvent, to prepare a measurement sample. The solvent is selected from liquid media capable of dissolving the oligomer, according to the kind of the oligomer. The measurement sample is subjected to GPC under the conditions below, to determine its Mw.
Instrument: SYSTEM-21H, manufactured by Shodex Co., Ltd.
Detector: RI detector
Mobile phase: Tetrahydrofuran
Flow rate: 1 mL/min
Column: KD-806M (× 3 columns), manufactured by Shodex Co., Ltd.
Column temperature: 40 °C
Reference material: Standard polystyrene (Mw = 65000, 5780, 589)

The first oligomer may be used singly, or in combination of two or more kinds. For example, two or more of kinds differing in type may combined, or two or more of kinds differing in Mw may be combined. Likewise, the second oligomer may be used singly or in combination of two or more kinds. For example, two or more kinds differing in type may be combined, or two or more of kinds differing in Mw may be combined.

In view of ensuring high optical shaping properties, it is preferable to include an oligomer having a (meth)acryloyl group as a reactive group (an acrylic oligomer). The content of the oligomer having a (meth)acryloyl group in the whole reactive oligomer is, for example, 80 mass% or more, may be 90 mass% or more, and may be 95 mass% or more. Also, the first and/or second oligomer may be constituted only of an oligomer having a (meth)acryloyl group.

The first and second oligomers may be, for example, a (meth)acrylate of a polyhydroxy compound. Examples of the polyhydroxy compound include a polyalkylene glycol, an alkylene oxide adduct of an aliphatic polyol or an aliphatic polyamine (e.g., triethanolamine, ethylene diamine), an alkylene oxide adduct of an alicyclic polyol (e.g., hydrogenated bisphenols) or an alicyclic polyamine, an alkylene oxide adduct of an aromatic polyol (e.g., bisphenols) or an aromatic polyamine, and an oligomeric polyol. Examples of the aliphatic polyol include an aliphatic polyol having three or more hydroxy groups (e.g., glycerin, trimethylolpropane, pentaerythritol), and a saccharide (e.g., sorbitol, sucrose).

Examples of the oligomeric polyol include a polyether polyol, a polyester polyol, a polyether ester polyol, a polyurethane polyol, a polyester urethane polyol, a polyether urethane polyol, and a polycarbonate polyol. These polyols may have an aromatic ring, an aliphatic ring, and/or a heterocycle (e.g., a heterocycle including a heteroatom (oxygen, nitrogen, and/or sulfur, etc.) as a ring-constituting element). In view of the ease of balancing the toughness and the strength of the cured product, a (meth)acrylate of polyurethane polyol and/or a (meth)acrylate of polyether urethane polyol may be used. When a (meth)acrylate of a polyol having a urethane structure is used, the heat resistance also can be improved.

The oligomer preferably includes a polyoxyalkylene chain. When an oligomer including a polyoxyalkylene chain is used, crosslinking is unlikely to occur in portions other than the reactive group, and thus, a linear polymer is likely to be obtained by polymerization of the reactive monomer. Thus, a cured product which is excellent in elongation at break and breaking strength and also has high shrinkability is likely to be obtained.

Usually, a polyoxyalkylene chain is included in the polyhydroxy compound. For example, in the case of an alkylene oxide adduct, the portion including added alkylene oxide units is a polyoxyalkylene chain. Since a polyoxyalkylene chain is also included in polyalkylene glycol, an oligomeric polyol having a polyether chain (specifically, polyether polyol, polyether ester polyol, polyether urethane polyol, etc.), and the like, oligomers using such polyols are also preferred. Among these, an oligomeric polyol having a polyether chain (more specifically, a polyoxyalkylene chain) is preferred in view of ensuring higher strength.

The polyoxyalkylene chain includes, for example, a polyoxy C₂₋₄ alkylene chain. The polyoxyalkylene chain may be, for example, a repeating structure of at least one oxyalkylene unit selected from oxyethylene, oxypropylene, oxytrimethylene, oxybutylene, and the like. The number of oxyalkylene groups included in one molecule of the oligomer is, for example, greater than 10, and may be 20 or more, or 50 or more. The upper limit of the number of oxyalkylene groups included in one molecule of the oligomer is not particularly limited, and can be selected, for example, according to the upper limit of the Mw of the oligomer. The number of oxyalkylene groups included in one molecule of the oligomer is, for example, 800 or less, and may be 600 or less. These lower and upper limit values can be combined in any combination.

The number of oxyalkylene groups included in one molecule of the oligomer may be greater than 10 and 800 or less (600 or less), 20 or more and 800 or less (or 600 or less), or 50 or more and 800 or less (or 600 or less).

As the oligomer, a commercial product may be used, or an oligomer synthesized by a known method may be used. For example, an acrylic oligomer may be synthesized by esterifying a polyhydroxy compound (e.g., the above-described polyhydroxy compound) with a (meth)acrylic acid, or may be synthesized by reacting a (meth)acrylate having a hydroxy group (CH₂=CH(-R³)-C(=O)O-R⁴-OH) with an oligomer having a functional group capable of reacting with a hydroxy group. In the latter case, the oligomer moiety having a -O-R⁴-O-R⁵- group corresponds to the above-described polyhydroxy compound. Here, R³ is a hydrogen atom or a methyl group, R⁴ is a divalent organic group (e.g., alkylene group), and R⁵ is a residue formed through the reaction of the above-described functional group with a hydroxy group.

For example, an acrylic oligomer having a urethane structure can be obtained by introducing an isocyanate group at a terminal of a polyhydroxy compound (among the above-described polyhydroxy compounds, polyether polyol, polyester polyol, polyether ester polyol, polycarbonate polyol, etc.) through a reaction of the polyhydroxy compound with a polyisocyanate, and causing a reaction between the introduced isocyanate group at the terminal and a (meth)acrylate having a hydroxy group. The polyisocyanate includes, but is not limited to, an aliphatic polyisocyanate (e.g., non-yellowing polyisocyanate), an aromatic polyisocyanate (e.g., yellowing polyisocyanate), and/or a hardly yellowing polyisocyanate. The (meth)acrylate having a hydroxy group may be an aromatic, alicyclic, or aliphatic (meth)acrylate, but in many cases, a hydroxyalkyl (meth)acrylate (e.g., hydroxy C₁₋₆ alkyl(meth)acrylate, such as hydroxyethyl (meth)acrylate) is used. The reactions are well known, and known reaction conditions may be adopted.

### (Photopolymerization initiator)

The photopolymerization initiator included in the photocurable resin composition A is activated by the action of light, and initiates curing (specifically, polymerization) of the photocurable monomer and oligomer. Examples of the photopolymerization initiator include, in addition to a radical polymerization initiator that generates radicals by the action of light, an agent that produces an acid (or cation) by the action of light (specifically, a cation generator). The photopolymerization initiator may be used singly or in a combination of two or more kinds. The photopolymerization initiator is selected according to the type of the polymerizable compound, for example, according to whether the polymerizable compound is radically polymerizable or cationically polymerizable. The radical polymerization initiator (radical photopolymerization initiator) is exemplified by an alkylphenone-series photopolymerization initiator, an acylphosphine oxide-series photopolymerization initiator, and the like.

Examples of the alkylphenone-series photopolymerization initiator include 2,2-dimethoxy-1,2-diphenylethan-1-one, 1-hydroxycyclohexyl phenyl ketone, 2-hydroxy-2-methyl-1-phenyl-propan-1-one, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]phenyl}-2-methyl-propan-1-one, 2-methyl-1-(4-methylthiophenyl)-2-morpholinopropan-1-one, 2-benzyl-2-dimethylamino-1-(4-morpholinophenyl)-butanone-1, and 2-(dimethylamino)-2-[(4-methylphenyl)methyl]-1-[4-(4-morpholinyl)phenyl]-1-butanone. The alkylphenone-series photopolymerization initiator also encompasses a cycloalkylphenone-series photopolymerization initiator, such as the above-mentioned 1-hydroxycyclohexyl phenyl ketone.

Examples of the acylphosphine oxide-series photopolymerization initiator include 2,4,6-trimethylbenzoyl-diphenyl-phosphine oxide, and bis(2,4,6-trimethylbenzoyl)-phenyl-phosphine oxide.

Note that, however, these photopolymerization initiators are merely illustrative, and the photopolymerization initiator is not limited thereto.

### (Ceramic particles)

The photocurable resin composition A may contain ceramic particles. The ceramic particles improve the elongation at break and the mechanical strength of the cured product A. Usually, ceramic particles have a functional group, such as an inorganic hydroxy group, on the surface thereof. The functional group interacts, through hydrogen bonding or the like, with the reactive monomer, the reactive oligomer, or polymerized products thereof, to form pseudo-crosslinking points.

Examples of the ceramic particles include silica particles, titania particles, alumina particles, and zirconia particles. The photocurable resin composition A may include one kind of these ceramic particles, or two or more kinds thereof in combination. In view of the ease of achieving high transparency, the ceramic particles preferably include at least silica particles. Among them, preferred are ceramic particles of monodisperse type (e.g., colloidal type).

The average particle diameter of the ceramic particles may be 10 µm or less, 1 µm or less, or 500 nm or less. In terms of allowing for uniform dispersion in the photocurable resin composition A, the average particle diameter of the ceramic particles is preferably 100 nm or less. The average particle diameter of the ceramic particles may be 5 nm or more, or 10 nm or more.

In the present specification, the average particle diameter is determined as a particle diameter (D50) at a cumulative volume 50% of a volume-based particle size distribution, as measured using a laser diffraction-scattering particle size distribution analyzer. When the average particle diameter is 100 nm or less, the average particle diameter is determined using a particle size distribution analyzer by dynamic light scattering.

The content of the ceramic particles in the photocurable resin composition A is, for example, 0.1 mass% or more. The content of the ceramic particles may be 1 mass% or more, and 5 mass% or more. In terms of the ease of ensuring higher flexibility of the cured product, the content of the ceramic particles is preferably 50 mass% or less, and may be 40 mass% or less.

### (Others)

The photocurable resin composition A may further include other known curable resins and the like. The photocurable resin composition A can include a thiol compound, an amine compound, and/or a known additive (e.g., colorant, antioxidant, antifoaming agent, filler, stabilizer).

### [Method for producing three-dimensional optical shaped object]

The three-dimensional optical shaped object can be produced, for example, by a production method including: a step (i) of forming a liquid film of a photocurable resin composition A, and curing the liquid film, to form a pattern; a step (ii) of forming an additional liquid film in contact with the pattern; and a step (iii) of curing the additional liquid film on the pattern, to laminate an additional pattern.

A description will be given below of an example of procedures of vat-using optical shaping.

FIG. 1 shows an exemplary case of forming a three-dimensional shaped object with an optical shaping apparatus (patterning apparatus) including a resin tank (vat). Although the illustrated example shows a suspension-type shaping, any method may be employed that can perform three-dimensional optical shaping using the photocurable resin composition A. The light irradiation (exposure) is not limited to a specific method, and may be point exposure or plane exposure.

A patterning apparatus 1 includes a platform 2 having a pattern forming surface 2a, a resin tank 3 containing a photocurable resin composition A (5), and a projector 4 serving as a light source of plane exposure method.

### (i) Step of forming liquid film and curing liquid film to form pattern

In the step (i), as shown in (a), first, the pattern forming surface 2a of the platform 2, while being faced to the projector 4 (i.e., the bottom surface of the resin tank 3), is submerged in the photocurable resin composition A contained in the resin tank 3. At this time, the height of the pattern forming surface 2a (or the platform 2) is adjusted such that a liquid film 7a (liquid film a) can be formed between the pattern forming surface 2a and the projector 4 (or the bottom surface of the resin tank 3). Next, as shown in (b), the liquid film 7a is irradiated with (plane-exposed to) a light L emitted from the projector 4, so that the liquid film 7a is photocured into a pattern 8a (pattern a).

In the patterning apparatus 1, the resin tank 3 serves as a supply unit for supplying the photocurable resin composition A. The resin tank, at least at a portion present between the liquid film and the projector 4 (in the illustrated example, the portion is the bottom surface), is desirably transparent to the exposure wavelength, so that the liquid film can be irradiated with light emitted from the light source. The shape, material, size and the like of the platform 2 are not specifically limited.

After the liquid film a is formed, the liquid film a is photocured by light irradiation from the light source toward the liquid film a. The light irradiation can be performed by any known method. The exposure method is not particularly limited, and may be point exposure or surface exposure. The light source may be any known light source used for photocuring. In the case of the point exposure method, for example, a plotter, a galvano laser (or galvano scanner), an SLA (stereolithography), or the like can be used. In the case of the plane exposure method, a projector can be conveniently used as a light source. Examples of the projector include LCD (transmission-type liquid crystal), LCoS (reflection-type liquid crystal), and DLP (registered trademark, Digital Light Processing) projectors. The exposure wavelength can be selected as appropriate, according to the kind and the like of the constituent components (in particular, the type of the initiator) of the photocurable resin composition A.

### (ii) Step of forming liquid film between pattern a and light source

In the step (ii), the photocurable resin composition A is supplied between the pattern a obtained in the step (i) and the light source, to form a liquid film (liquid film b). In short, a liquid film b is formed on the pattern a formed on the pattern forming surface. For the supply of the photocurable resin composition A, the description of the step (i) can be referred to.

For example, in the step (ii), as shown in (c) in FIG. 1, after the two-dimensional pattern 8a (two-dimensional pattern a) is formed, the pattern formation surface 2a may be lifted together with the platform 2. Along therewith, the photocurable resin composition A is supplied between the two-dimensional pattern 8a and the bottom surface of the resin tank 3. Thus, a liquid film 7b (liquid film b) can be formed.

### (iii) Step of laminating additional pattern b on pattern a

In the step (iii), the liquid film b formed in the step (ii) is exposed to light emitted from the light source, so that the liquid film b is photocured. Thus, an additional pattern (pattern b obtained by photocuring of the liquid film b) is laminated on the pattern a. As a result of patterns having been laminated in the thickness direction in this way, a three-dimensional shaped pattern can be formed.

For example, as shown in (d) in FIG. 1, the liquid film 7b (liquid film b) formed between the pattern 8a (pattern a) and the bottom surface of the resin tank 3 is exposed to light emitted from the projector 4, so that the liquid film 7b is photocured. This photocuring converts the liquid film 7b into a pattern 8b (pattern b). In this way, the pattern 8b can be laminated on the pattern 8a.

For the light source, the exposure wavelength and the like, the description of the step (i) can be referred to.

### (iv) Step of repeating step (ii) and step (iii)

The first step can include a step (iv) of repeating the steps (ii) and (iii) a plurality of times. Through this step (iv), a plurality of patterns b are laminated in the thickness direction, and a shaped pattern with more three-dimensional shape can be obtained. The number of times of repeating can be determined as appropriate according to the shape, size, and the like of a desired three-dimensional shaped object (three-dimensional shaped pattern).

For example, as shown in (e) in FIG. 1, the platform 2, with the pattern 8a (pattern a) and the pattern 8b (pattern b) laminated on the pattern forming surface 2a, is lifted. Along therewith, the liquid film 7b (liquid film b) is formed between the pattern 8b and the bottom surface of the resin tank 3. Then, as shown in (f) in FIG. 1, the liquid film 7b is exposed to light emitted from the projector 4, so that the liquid film 7b is photocured. This forms an additional pattern 8b (pattern b) on the pattern 8b. By repeating (e) and (f) alternately, a plurality of the patterns 8b (two-dimensional patterns b) can be laminated.

The three-dimensional shaped pattern obtained in the step (iii) or (iv) has some uncured photocurable resin composition A attached thereto, and therefore, is usually subjected to cleaning with a solvent.

The three-dimensional shaped pattern obtained in the step (iii) or (iv) may be optionally subjected to post-curing. The post-curing can be performed by irradiating the pattern with light. The conditions of light irradiation can be adjusted as appropriate according to the kind of the photocurable resin composition A, the degree of curing of the obtained pattern, and the like. The post-curing may be performed on a part of the pattern, and may be performed on the whole thereof.

### [Examples]

In the following, the present invention will be specifically described by way of Examples and Comparative Examples. The present invention, however, is not limited to the following Examples.

### Examples 1 to 28 and Comparative Examples 1 to 5

### (1) Preparation of photocurable resin composition

The components shown in Table 2 were mixed in mass ratios shown in Tables 3A, 3B, 4A, 4B, 5A, 5B or 6, and heated in an oven at 80°C under stirring, to dissolve the solid components, thereby to prepare a uniform liquid mixture. In this way, photocurable resin compositions (A1 toA16 of Examples 1 to 16 and B1 to B5 of Comparative Examples 1 to 5) were prepared. In the above tables, the molecular weight of the oligomer is a weight average molecularweight Mw. OmniradTPO H and Omnirad819 are acylphosphine oxide-series photopolymerization initiators. Omnirad184 is an alkylphenone-series photopolymerization initiator.

### (2) Evaluation

The photocurable resin compositions obtained in the above (1) or the components used for the photocurable resin compositions were evaluated in the following manner.

### (a) Viscosity

The viscosity of each of the photocurable resin compositions was measured with an E type viscometer (TVE-20H, Toki Sangyo Co., Ltd.), at 25 °C and a rotation speed of 20 rpm.

### (b) Shore A hardness and relaxation stress

Except for Example 22, a strip-shaped sample (length: 40 mm, width: 20 mm, thickness (height): 4 mm) of each Example and Comparative Example was prepared using a DLP (registered trademark) 3D printer (ML-48, manufactured by Mutoh Industries Ltd.), under the conditions of an irradiation time per one layer of 30 seconds and a pitch in the z-axis (height direction) of 100 µm. In Example 22, a sample was prepared under the same conditions as above, except that an SLA (stereolithography) 3D printer (Lite 100, manufactured by UnionTech) was used. With respect the obtained samples, the Shore A hardness was measured at 23 °C, using a type-A durometer, under a load of 1 kg, in accordance with JIS K6253:2012.

### (c) Elongation at break, breaking strength, and breaking energy

A liquid film of each of the photocurable resin compositions was irradiated with LED light, to fully cure the liquid film, and thus, the already-described test pieces were prepared. As the LED light, in Example 22, an LED light with a wavelength of 355 nm was used, and in the other Examples and Comparative Examples, an LED light with a wavelength of 405 nm was used. Using the prepared test pieces, the elongation at break (%) and breaking strength (MPa) were measured in accordance with ASTM D638 under the already-described conditions. In addition, the breaking energy was determined by multiplying the elongation at break (%) by the breaking strength (MPa).

### (d) TgA, TgB, elastic modulus, tanδ, and stress relaxation

Each of the photocurable resin compositions was poured into a tray, and a liquid film having a thickness of 500 µm was formed. Both principal surfaces of the liquid film were irradiated with LED light, to fully cure the liquid film, and thus, a sample of a cured product was prepared. As the LED light, in Example 22, an LED light with a wavelength of 355 nm was used, and in the other Examples and Comparative Examples, an LED light with a wavelength of 405 nm was used. As the tray, a tray that allows for transmission of the above-described LED lights therethrough was used.

The obtained samples was heated from -100 °C to +300 °C using a DMA (DMS 6100, manufactured by Hitachi High-Tech Science Corporation), at a frequency of 1 Hz and a temperature rising rate of 5 °C/min. Then, the elastic moduli (storage moduli) (MPa) at 25 °C and 40 °C, and the tanδ at 25 °C were determined, and the temperature at which the tanδ reached a peak was determined as the Tg (TgA, TgB) of a cured product A of the photocurable resin composition A. When the tanδ exceeded 0.2, the stress relaxation was regarded as present, and when 0.2 or less, the stress relaxation was regarded as absent. In additions, the absolute value (ΔE(25 - 40)) of the difference between the storage modulus at 25 °C (E(25)) of the cured product and the storage modulus at 40 °C (E(40)) of the cured product A was determined, and a ratio thereof to the E (25) (= ΔE(25 - 40) / E(25) × 100) (%) was determined.

Further, instead of the photocurable resin composition A, a reactive monomer and a reactive oligomer were respectively used, and in the same manner as above, the Tg of a singly cured product of the reactive monomer and the Tg of a singly cured product of the reactive oligomer were determined, and the weighted average of the obtained results was calculated, to determine the Tg1 and the Tg2 of the first compound and the second compound. In addition, the difference between the TgB and the TgA (ΔTBA), the difference between the Tg2 and the Tg1 (ΔT21), and the absolute value of the difference between the ΔT21 and the ΔBA (Δ(T21 - TBA)) were determined.

The polarity term dp of HSP was calculated by inputting the SMILES character string related to the chemical structure, which was used in the software ChemDraw, into Calculate HSP of the HSP calculation software HSPiP. The polarity term dP (dPL) of HSP of the first compound, the polarity term dP (dPH) of HSP of the second compound, and the absolute value of the difference between the dPL and the dPH (Δ (dPL - dPH)) are shown in Tables 3A, 3B, 4A, 4B, 5A, 5B or 6.

### (e) Rebound resilience modulus

For Examples 17 to 28, the photocurable resin composition was poured into a bottomed cylindrical tray whose innerdiameter was 29 mm, to prepare a liquid film with a thickness of 12.5 mm, and both principal surfaces of the liquid film were irradiated with LED light, to fully cure the liquid film, and thus, a sample of a cured product was prepared. As the LED light, in Example 22, an LED light with a wavelength of 355 nm was used, and in the other Examples, an LED light with a wavelength of 405 nm was used. As the tray, a tray that allows for transmission of the above-described LED lights therethrough was used. Using the obtained test pieces, the rebound resilience modulus (%) at 25 °C was determined in the already-described manner.

The results of Examples and Comparative Examples are shown in Tables 3A, 3B, 4A, 4B, 5A, 5B, and 6. In these tables, A1 to A28 are Examples and B1 to B5 are Comparative Examples.

**[Table 2]**

| Simplified name | Compound name | Tg | mol. wt. | SMILES code | dP |
|---|---|---|---|---|---|
| first monomer 1 | (3-phenoxyphenyl)methylprop-2-enoate | -35 | 254 | C=CC(=O)OCC1=CC=C(OC2=CC=CC=C2)C=C1 | 4.9 |
| first monomer 2 | 4-hydroxybutyl acrylate | -32 | 144 | OCCCCOC(=O)C=C | 7.0 |
| first monomer 3 | (2-methyl-2-ethyl-1,3-dioxolan-4-yl)methyl acrylate | -7 | 200 | [H]C(=C)C(=O)OCC1COC(C)(CC)O1 | 6.0 |
| first monomer 4 | phenoxyethyl acrylate | 2 | 192 | C=CC(=O)OCCOC1=CC=CC=C1 | 5.4 |
| first monomer 5 | alkoxylated phenol acrylate | -24 | 396 | C=CC(=O)OCCOCCOCCOCCOCCOC1=CC=CC=C1 | 6.1 |
| second monomer 1 | 3-vinyl-5-methyl-2-oxazolidinone | 210 | 127 | CC1CN(C=C)C(=O)O1 | 10.2 |
| second monomer 2 | acryloyl morpholine | 145 | 141 | C=CC(=O)N1CCOCC1 | 11.5 |
| second monomer 3 | dicyclopentenyl acrylate | 120 | 204 | C=CC(=O)OC1CC2CC1C1C=CCC21 | 3.2 |
| second monomer 4 | isobomyl acrylate | 97 | 208 | CC1(C)C2CCC1(C)C(C2)OC(=O)C=C | 2.6 |
| second monomer 5 | N-phenylmaleimide | 165 | 173 | O=C1C=CC(=O)N1C1=CC=CC=C1 | 9.1 |
| second monomer 6 | tricyclodecane dimethanol diacrylate: bifunctional | 190 | 300 | C=CC(=O)OCC1CC2C3CC(COC(=O)C=C)C(C3)C2C1 | 4.0 |
| second monomer 7 | isocyanuric acid ethylene oxide-modified triacrylate: trifunctional | 272 | 423 | C=CC(=O)OCCN1C(=O)N(CCOC(=O)C=C)C(=O)N(CCOC(=O)C=C)C1=O | 1.8 |
| first oligomer 1 | ether-type urethane acrylate: bifunctional | -30 | 11000 | - | 5.0 |
| first oligomer 2 | ether-type urethane acrylate: bifunctional | -50 | 36000 | - | 3.0 |
| first oligomer 3 | ether-type urethane acrylate: bifunctional | -65 | 15000 | - | approx. 3 |
| first oligomer 4 | ether-type urethane acrylate: bifunctional | -58 | 19000 | - | |
| first oligomer 5 | ether-type urethane acrylate: bifunctional | -58 | 14000 | - | |
| first oligomer 6 | ether-type urethane acrylate: bifunctional | -55 | 13000 | - | |

**[Table 3A]**

| | Tg (°C) | mol. wt. | dP | A1 | A2 | A3 | A4 |
|---|---|---|---|---|---|---|---|
| first monomer 1 | -35 | 254 | 4.9 | | | | 30 |
| first monomer 2 | -32 | 144 | 7.0 | 30 | 30 | 30 | |
| first monomer 3 | -7 | 200 | 6.0 | | | | |
| first monomer 4 | 2 | 192 | 5.4 | | | | |
| first oligomer 2 | -50 | 36000 | 3.0 | 40 | 40 | 40 | 40 |
| second monomer 1 | 210 | 127 | 10.2 | 30 | | | |
| second monomer 2 | 145 | 141 | 11.5 | | 30 | | 30 |
| second monomer 3 | 120 | 204 | 3.2 | | | 30 | |
| second monomer 6 | 190 | 300 | 4.0 | | | | |
| OmniradTPO H | | 348 | | 3 | 3 | 3 | 3 |
| Omnirad819 | | 419 | | | | | |
| viscosity (mPa s) | | | | 1075 | 1813 | 1829 | 2697 |
| Shore A hardness | | | | 70 | 73 | 70 | 91 |
| stress relaxation | | | | absent | present | present | absent |
| elongation at break (%) | | | | 449 | 499 | 208 | 564 |
| breaking strength (MPa) | | | | 13 | 13 | 7 | 19 |
| breaking energy | | | | 5828 | 6252 | 1460 | 10586 |
| storage modulus (MPa) 25 °C | | | | 11.6 | 9.8 | 29.5 | 108 |
| storage modulus (MPa) 40 °C | | | | 9.4 | 7.9 | 5.5 | 64 |
| tanδ 25 °C | | | | 0.200 | 0.240 | 0.650 | 0.179 |
| Tg1 (°C) | | | | -42 | -42 | -42 | -44 |
| Tg2 (°C) | | | | 210 | 145 | 120 | 145 |
| TgA (°C) | | | | -38 | -37 | -44 | -42 |
| TgB (°C) | | | | 83 | 79 | 35 | 88 |
| ΔT21 (°C) | | | | 252 | 187 | 162 | 189 |
| ΔTBA (°C) | | | | 121 | 116 | 79 | 130 |
| Δ(T21-TBA) (°C) | | | | 131 | 71 | 83 | 59 |
| dPL (MPa^{1/2}) | | | | 4.7 | 4.7 | 4.7 | 3.8 |
| dPH (MPa^{1/2}) | | | | 10.2 | 11.5 | 3.2 | 11.5 |
| Δ(dPL-dPH) (MPa^{1/2}) | | | | 5.5 | 6.8 | 1.5 | 7.7 |
| ΔE(25-40)/E(25)×100 (%) | | | | 18.9 | 19.2 | 81.4 | 40.5 |

**[Table 3B]**

| | Tg (°C) | mol. wt. | dP | A5 | A6 | A7 | A8 |
|---|---|---|---|---|---|---|---|
| first monomer 1 | -35 | 254 | 4.9 | | | | |
| first monomer 2 | -32 | 144 | 7.0 | | | | |
| first monomer 3 | -7 | 200 | 6.0 | 30 | | | |
| first monomer 4 | 2 | 192 | 5.4 | | 30 | | |
| first oligomer 2 | -50 | 36000 | 3.0 | 40 | 40 | 50 | 45 |
| second monomer 1 | 210 | 127 | 10.2 | | | 45 | 55 |
| second monomer 2 | 145 | 141 | 11.5 | 30 | 30 | | |
| second monomer 3 | 120 | 204 | 3.2 | | | | |
| second monomer 6 | 190 | 300 | 4.0 | | | 5 | |
| OmniradTPO H | | 348 | | 3 | 3 | | |
| Omnirad819 | | 419 | | | | 1 | 1 |
| viscosity (mPa s) | | | | 1761 | 2211 | 3439 | 1482 |
| Shore A hardness | | | | 86 | 84 | 94 | 83 |
| stress relaxation | | | | present | present | absent | absent |
| elongation at break (%) | | | | 644 | 510 | 401 | 596 |
| breaking strength (MPa) | | | | 16 | 18 | 23 | 19 |
| breaking energy | | | | 10214 | 9241 | 9247 | 11235 |
| storage modulus (MPa) 25 °C | | | | 71.3 | 45.2 | 149 | 9.3 |
| storage modulus (MPa) 40 °C | | | | 36 | 26 | 159 | 9.7 |
| tanδ 25 °C | | | | 0.252 | 0.206 | 0.100 | 0.159 |
| Tg1 (°C) | | | | -32 | -28 | -50 | -50 |
| Tg2 (°C) | | | | 145 | 145 | 208 | 210 |
| TgA (°C) | | | | -43 | -37 | -48 | -44 |
| TgB (°C) | | | | 81 | 83 | 211 | 220 |
| ΔT21 (°C) | | | | 177 | 173 | 258 | 260 |
| ΔTBA (°C) | | | | 124 | 120 | 259 | 264 |
| Δ(T21-TBA) (°C | | | | 53 | 53 | 1 | 4 |
| dPL (MPa^{1/2}) | | | | 4.3 | 4.0 | 3 | 3 |
| dPH (MPa^{1/2}) | | | | 11.5 | 11.5 | 9.6 | 10.2 |
| Δ(dPL-dPH) (MPa^{1/2}) | | | | 7.2 | 7.5 | 6.6 | 7.2 |
| ΔE(25-40)/E(25)×100 (%) | | | | 49.7 | 42.7 | 6.5 | 3.8 |

**[Table 4A]**

| | Tg(°C) | mol. wt. | dP | A9 | A10 | A11 | A12 |
|---|---|---|---|---|---|---|---|
| first monomer 2 | -32 | 144 | 7.0 | | | 10 | 10 |
| first monomer 3 | -7 | 200 | 6.0 | | | | |
| first oligomer 1 | -30 | 11000 | 5.0 | 10 | 10 | 5 | 5 |
| first oligomer 2 | -50 | 36000 | 3.0 | 40 | 40 | 35 | 40 |
| second monomer 1 | 210 | 127 | 10.2 | 50 | 40 | 40 | 40 |
| second monomer 2 | 145 | 141 | 11.5 | | | | |
| second monomer 3 | 120 | 204 | 3.2 | | | | |
| second monomer 5 | 165 | 173 | 9.1 | | 10 | 10 | 5 |
| OmniradTPO H | | 348 | | | | | |
| Omnirad819 | | 419 | | 1 | 1 | 1 | 1 |
| viscosity (mPa s) | | | | 2639 | 4163 | 1339 | 1931 |
| Shore A hardness | | | | 87 | 86 | 89 | 89 |
| stress relaxation | | | | absent | absent | absent | absent |
| elongation at break (%) | | | | 522 | 387 | 310 | 458 |
| breaking strength (MPa) | | | | 24 | 18 | 21 | 22 |
| breaking energy | | | | 12465 | 6803 | 6464 | 10100 |
| storage modulus (MPa) 25 °C | | | | 43.6 | 107 | 189 | 146 |
| storage modulus (MPa) 40 °C | | | | 45.9 | 94.5 | 163 | 127 |
| tanδ 25 °C | | | | 0.167 | 0.137 | 0.137 | 0.141 |
| Tg1 (°C) | | | | -46 | -46 | -44 | -45 |
| Tg2 (°C) | | | | 210 | 201 | 201 | 205 |
| TgA (°C) | | | | -47 | -49 | -49 | -49 |
| TgB (°C) | | | | 221 | 232 | 239 | 206 |
| ΔT21 (°C) | | | | 256 | 247 | 245 | 250 |
| ΔTBA (°C) | | | | 268 | 281 | 288 | 255 |
| Δ(T21-TBA) (°C) | | | | 12 | 34 | 43 | 5 |
| dPL (MPa^{1/2}) | | | | 3.4 | 3.4 | 4 | 3.9 |
| dPH (MPa^{1/2}) | | | | 10.2 | 10.0 | 10.0 | 10.1 |
| Δ(dPL-dPH) (MPa^{1/2}) | | | | 6.8 | 6.6 | 6.0 | 6.2 |
| ΔE(25-40)/E(25)×100 (%) | | | | 5.3 | 11.7 | 13.8 | 13.0 |

**[Table 4B]**

| | Tg (°C) | mol. wt. | dP | A13 | A14 | A15 | A16 |
|---|---|---|---|---|---|---|---|
| first monomer 2 | -32 | 144 | 7.0 | | 35 | 30 | 30 |
| first monomer 3 | -7 | 200 | 6.0 | 5 | | 10 | |
| first oligomer 1 | -30 | 11000 | 5.0 | 5 | | | |
| first oligomer 2 | -50 | 36000 | 3.0 | 40 | 40 | 40 | 40 |
| second monomer 1 | 210 | 127 | 10.2 | 45 | | 20 | |
| second monomer 2 | 145 | 141 | 11.5 | | 15 | | 15 |
| second monomer 3 | 120 | 204 | 3.2 | | 10 | | 15 |
| second monomer 5 | 165 | 173 | 9.1 | 5 | | | |
| OmniradTPO H | | 348 | | | 3 | 3 | 3 |
| Omnirad819 | | 419 | | 1 | | | |
| viscosity (mPa s) | | | | 1973 | 1732 | 1251 | 1824 |
| Shore A hardness | | | | 91 | 71 | 71 | 75 |
| stress relaxation | | | | absent | present | present | present |
| elongation at break (%) | | | | 540 | 365 | 734 | 317 |
| breaking strength (MPa) | | | | 24 | 7 | 11 | 7 |
| breaking energy | | | | 12910 | 2577 | 8133 | 2292 |
| storage modulus (MPa) 25 °C | | | | 142 | 7.9 | 5.1 | 9.7 |
| storage modulus (MPa) 40 °C | | | | 118 | 6.3 | 6.0 | 6.1 |
| tanδ 25 °C | | | | 0.154 | 0.279 | 0.245 | 0.338 |
| Tg1 (°C) | | | | -44 | -42 | -38 | -42 |
| Tg2 (°C) | | | | 206 | 135 | 210 | 133 |
| TgA (°C) | | | | -48 | -35 | -38 | -36 |
| TgB (°C) | | | | 222 | 54 | 54 | 51 |
| ΔT21 (°C) | | | | 249 | 177 | 248 | 175 |
| ΔTBA (°C) | | | | 270 | 89 | 92 | 87 |
| Δ(T21-TBA) (°C | | | | 21 | 88 | 156 | 88 |
| dPL (MPa^{1/2}) | | | | 3.5 | 4.9 | 4.9 | 4.7 |
| dPH (MPa^{1/2}) | | | | 10.1 | 8.2 | 10.2 | 7.4 |
| Δ(dPL-dPH) (MPa^{1/2}) | | | | 6.6 | 3.3 | 5.3 | 2.6 |
| ΔE(25-40)/E(25)×100 (%) | | | | 16.9 | 21.1 | 17.5 | 37.0 |

**[Table 5A]**

| | Tg (°C) | mol. wt. | dP | A17 | A18 | A19 | A20 | A21 |
|---|---|---|---|---|---|---|---|---|
| first monomer 2 | -32 | 144 | 7.0 | | | | 4 | 5 |
| first monomer 4 | 2 | 192 | 5.4 | | | | | |
| first monomer 5 | -24 | 396 | 6.1 | | | | | |
| first oligomer 3 | -65 | 15000 | 3 | 35 | 40 | 35 | 36 | 35 |
| first oligomer 4 | -58 | 19000 | 3 | | | 25 | 20 | 30 |
| first oligomer 5 | -58 | 14000 | 3 | | | | | |
| first oligomer 6 | -55 | 13000 | 3 | 35 | 25 | 10 | 10 | |
| second monomer 1 | 210 | 127 | 10.2 | 30 | 33 | 30 | 30 | 30 |
| second monomer 2 | 145 | 141 | 11.5 | | 2 | | | |
| second monomer 5 | 165 | 173 | 9.1 | | | | | |
| second monomer 6 | 190 | 300 | 4.0 | | | | | |
| second monomer 7 | 272 | 423 | 1.8 | | | | | |
| Omnirad819 | | 419 | | 1 | 1 | 1 | 1 | 1 |
| Omnirad184 | | 204 | | | | | | |
| viscosity (mPa s) | | | | 3010 | 2372 | 2930 | 2530 | 2090 |
| Shore A hardness | | | | 75 | 81 | 60 | 76 | 72 |
| stress relaxation | | | | absent | absent | absent | absent | absent |
| elongation at break (%) | | | | 260 | 245 | 246 | 260 | 300 |
| breaking strength (MPa) | | | | 14 | 14 | 9 | 11 | 11 |
| breaking energy | | | | 3640 | 3430 | 2214 | 2860 | 3300 |
| storage modulus (MPa) 25 °C | | | | 17.2 | 42.2 | 10.3 | 42.9 | 24.7 |
| storage modulus (MPa) 40 °C | | | | 13.9 | 33.6 | 9.3 | 36.0 | 21.1 |
| tanδ 25 °C | | | | 0.148 | 0.134 | 0.103 | 0.103 | 0.097 |
| rebound resilience modulus (%) 25 °C | | | | 47.0 | 45.1 | 59.0 | 50.0 | 50.0 |
| Tg1 (°C) | | | | -60 | -61 | -61 | -60 | -60 |
| Tg2 (°C) | | | | 210 | 206 | 210 | 210 | 210 |
| TgA (°C) | | | | -53 | -54 | -54 | -55 | -54 |
| TgB (°C) | | | | 202 | 202 | 207 | 185 | 184 |
| ΔT21 (°C) | | | | 270 | 267 | 271 | 270 | 270 |
| ΔTBA (°C) | | | | 255 | 256 | 261 | 240 | 238 |
| Δ(T21-TBA) (°C) | | | | 15 | 11 | 10 | 30 | 32 |
| dPL (MPa^{1/2}) | | | | 3 | 3 | 3 | 3.2 | 3.3 |
| dPH (MPa^{1/2}) | | | | 10.2 | 10.3 | 10.2 | 10.2 | 10.2 |
| Δ(dPL-dPH) (MPa^{1/2}) | | | | 7.2 | 7.3 | 7.2 | 7.0 | 6.9 |
| ΔE(25-40)/E(25)×100 (%) | | | | 19.2 | 20.4 | 9.7 | 16.1 | 14.6 |

**[Table 5B]**

| | Tg (°C) | mol. wt. | dP | A22 | A23 | A24 | A25 | A26 | A28 |
|---|---|---|---|---|---|---|---|---|---|
| first monomer 2 | -32 | 144 | 7.0 | | | | | 19 | 20 |
| first monomer 4 | 2 | 192 | 5.4 | | | | | | 20 |
| first monomer 5 | -24 | 396 | 6.1 | | 25 | | | | |
| first oligomer 3 | -65 | 15000 | 3 | | 20 | | | | 40 |
| first oligomer 4 | -58 | 19000 | 3 | 60 | | | | 30 | |
| first oligomer 5 | -58 | 14000 | 3 | | 40 | 70 | 65 | | |
| first oligomer 6 | -55 | 13000 | 3 | | | | | 30 | |
| second monomer 1 | 210 | 127 | 10.2 | 38 | | | 25 | | |
| second monomer 2 | 145 | 141 | 11.5 | | | 25 | | 20 | 20 |
| second monomer 5 | 165 | 173 | 9.1 | | 5 | | | | |
| second monomer 6 | 190 | 300 | 4.0 | | | | | 1 | |
| second monomer 7 | 272 | 423 | 1.8 | 2 | 10 | 5 | 5 | | |
| Omnirad819 | | 419 | | 1 | 1 | | 1 | 1.5 | 1 |
| Omnirad184 | | 204 | | 3 | | | | | |
| viscosity (mPa s) | | | | 890 | 3010 | 1685 | 1190 | 1120 | 770 |
| Shore A hardness | | | | 68 | 71 | 85 | 77 | 70 | 76 |
| stress relaxation | | | | absent | absent | absent | absent | absent | absent |
| elongation at break (%) | | | | 250 | 134 | 160 | 140 | 215 | 270 |
| breaking strength (MPa) | | | | 11 | 7 | 7 | 10 | 13 | 11 |
| breaking energy | | | | 2750 | 938 | 1120 | 1400 | 2795 | 2970 |
| storage modulus (MPa) 25 °C | | | | 45.1 | 16.6 | 26.7 | 36.4 | 10.3 | 14.4 |
| storage modulus (MPa) 40 °C | | | | 40.2 | 1.7 | 22.9 | 31.5 | 8.5 | 10.1 |
| tanδ 25 °C | | | | 0.092 | 0.174 | 0.096 | 0.087 | 0.132 | 0.153 |
| rebound resilience modulus (%) 25 °C | | | | 47.0 | 44.0 | 48.0 | 61.0 | 52.0 | 45.0 |
| Tg1 (°C) | | | | -58 | -50 | -58 | -58 | -51 | -40 |
| Tg2 (°C) | | | | 213 | 236 | 166 | 220 | 147 | 145 |
| TgA (°C) | | | | -56 | -54 | -55 | -55 | -54 | -44 |
| TgB (°C) | | | | 206 | - | 129 | 191 | 72 | 55 |
| ΔT21 (°C) | | | | 271 | 286 | 224 | 278 | 198 | 185 |
| ΔTBA (°C) | | | | 262 | - | 184 | 246 | 126 | 99 |
| Δ(T21-TBA) (°C) | | | | 9 | - | 40 | 32 | 72 | 86 |
| dPL (MPa^{1/2}) | | | | 3.0 | 3.9 | 3.0 | 3.0 | 4.0 | 4.6 |
| dPH (MPa^{1/2}) | | | | 10 | 4.2 | 9.9 | 8.8 | 11.1 | 11.5 |
| Δ(dPL-dPH) (MPa^{1/2}) | | | | 6.8 | 0.3 | 6.9 | 5.8 | 7.2 | 6.9 |
| ΔE(25-40)/E(25)×100 (%) | | | | 10.9 | 90.1 | 14.2 | 13.5 | 18.0 | 29.9 |

**[Table 6]**

| | Tg (°C) | mol. wt. | dP | B1 | B2 | B3 | B4 | B5 |
|---|---|---|---|---|---|---|---|---|
| first monomer 1 | -35 | 254 | 4.9 | | | 55 | | |
| first monomer 2 | -32 | 144 | 7.0 | 55 | 55 | | | 30 |
| first monomer 3 | -7 | 200 | 6.0 | | | | 60 | |
| first oligomer 1 | -30 | 11000 | 5.0 | 25 | | | 40 | |
| first oligomer 2 | -50 | 36000 | 3.0 | 20 | 45 | 45 | | 40 |
| second monomer 4 | 97 | 208 | 2.6 | | | | | 30 |
| OmniradTPO H | | 348 | | 3 | 3 | 3 | 4 | 3 |
| viscosity (mPa s) | | | | 1089 | 1749 | 4180 | 508 | 1535 |
| Shore A hardness | | | | 49 | 25 | 28 | 50 | 38 |
| stress relaxation | | | | absent | absent | presen t | absent | presen t |
| elongation at break (%) | | | | 139 | 468 | 576 | 170 | 399 |
| breaking strength (MPa) | | | | 1 | 0.7 | 0.8 | 2 | 0.7 |
| breaking energy | | | | 155 | 319 | 466 | 340 | 295 |
| storage modulus (MPa) 25 °C | | | | 2.5 | 1.0 | 0.9 | 2.6 | 3.0 |
| storage modulus (MPa) 40 °C | | | | | | | | 1.24 |
| tanδ 25 °C | | | | 0.170 | 0.155 | 0.496 | 0.036 | 0.77 |
| Tg1 (°C) | | | | | | | | -42 |
| Tg2 (°C) | | | | | | | | 97 |
| TgA (°C) | | | | -53 | -45 | -44 | -8 | -44 |
| TgB (°C) | | | | -7 | -9 | 11 | - | 14 |
| ΔT21 (°C) | | | | | | | | 139 |
| ΔTBA (°C) | | | | | | | | 58 |
| Δ(T21-TBA) (°C) | | | | | | | | 81 |
| dPL (MPa^{1/2}) | | | | - | - | - | - | 35.0 |
| dPH (MPa^{1/2}) | | | | - | - | - | - | 2.6 |
| Δ(dPL-dPH) (MPa^{1/2}) | | | | - | - | - | - | 32.4 |
| ΔE(25-40)/E(25)×100 (%) | | | | | | | | 59.2 |

Tables 3A, 3B, 4A, 4B, 5A, 5B and 6 show that in the cured products A of the photocurable resin compositions A of Examples, as compared to those of Comparative Examples, regardless of whether the stress relaxation was present or absent, the elongation at break and the breaking strength were high, and excellent flexibility and high mechanical strength were both achieved.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

The photocurable resin composition according to the above aspect of the present invention is suitable as a material for forming a three-dimensional optical shaped object, with a 3D printer or the like. The optical shaped object is used in applications that require, for example, shock absorption properties, vibration isolation properties, vibration damping properties, and the like. However, the uses of the photocurable resin composition and the optical shaped object are not limited thereto only.

### [Reference Signs List]

1: optical shaping apparatus, 2: platform, 2a: pattern forming surface, 3: resin tank, 4: projector, 5: photocurable resin composition, 6: mold-releasing agent layer, 7a: liquid film a, 7b: liquid film b, 8a: two-dimensional pattern a, 8b: two-dimensional pattern b, L: light

## Claims

1. A photocurable resin composition, comprising:
a reactive compound; and a photopolymerization initiator, wherein
a cured product of the photocurable resin composition has two or more glass transition points including a TgA and a TgB,
the TgA being less than 25 °C, and
the TgB being 25 °C or more,
an elongation at break in accordance with ASTM D638 of the cured product of the photocurable resin composition is 130% or more, and
a breaking strength in accordance with ASTM D638 of the cured product of the photocurable resin composition is 3 MPa or more.

2. The photocurable resin composition according to claim 1, wherein the photocurable resin composition is a material for three-dimensional optical shaping.

3. The photocurable resin composition according to claim 1 or 2, wherein a storage modulus at 25 °C of the cured product of the photocurable resin composition is 500 MPa or less.

4. The photocurable resin composition according to any one of claims 1 to 3, wherein the breaking strength exceeds 5 MPa.

5. The photocurable resin composition according to any one of claims 1 to 4, wherein the elongation at break is 200% or more.

6. The photocurable resin composition according to any one of claims 1 to 5, wherein the TgA is -30 °C or less.

7. The photocurable resin composition according to any one of claims 1 to 6, wherein the TgB is 30 °C or more.

8. The photocurable resin composition according to any one of claims 1 to 7, wherein
the reactive compound includes a first compound and a second compound,
the first compound includes at least one of a first monofunctional monomer and a first oligomer,
the second compound includes at least one of a second monofunctional monomer and a second oligomer,
the reactive compound includes at least one of the first monofunctional monomer and the second monofunctional monomer,
a glass transition point Tg1 of a cured product of the first compound is 10 °C or less, and
a glass transition point Tg2 of a cured product of the second compound is 50 °C or more.

9. The photocurable resin composition according to claim 8, wherein the glass transition point Tg1 of the cured product of the first compound is -130 °C or more.

10. The photocurable resin composition according to claim 8 or 9, wherein the glass transition point Tg2 of the cured product of the second compound is 80 °C or more.

11. The photocurable resin composition according to any one of claims 8 to 10, wherein
the first monofunctional monomer is an acrylic monomer, and
the second monofunctional monomer is at least one selected from the group consisting of a vinyl-series monomer, an acrylic monomer, and a monomer having a cyclic group including a polymerizable carbon-carbon unsaturated bond.

12. The photocurable resin composition according to any one of claims 8 to 11, wherein the first oligomer and the second oligomer are acrylic oligomers.

13. The photocurable resin composition according to any one of claims 8 to 12, wherein the second compound includes a nitrogen-containing monomer.

14. The photocurable resin composition according to claim 13, wherein the nitrogen-containing monomer includes a monomer having a nitrogen-containing ring.

15. The photocurable resin composition according to claim 13 or 14, wherein the second monofunctional monomer includes the nitrogen-containing monomer.

16. The photocurable resin composition according to any one of claims 8 to 15, wherein a mass ratio between the first compound and the second compound is 20/80 to 85/15.

17. The photocurable resin composition according to any one of claims 8 to 16, wherein a difference between a polar term dP₁ of Hansen solubility parameter (HSP) of the first compound and a polar term dP₂ of Hansen solubility parameter of the second compound is 5.0 MPa^{0.5} or more.

18. The photocurable resin composition according to any one of claims 1 to 17, wherein the photocurable resin composition has a viscosity of 200 mPa s or more and 5,000 mPa s or less at 25 °C.

19. The photocurable resin composition according to any one of claims 1 to 18, further comprising ceramic particles.

20. The photocurable resin composition according to claim 19, wherein a content of the ceramic particles is 1 mass% or more and 50 mass% or less.

21. The photocurable resin composition according to any one of claims 1 to 20, wherein an absolute value of a difference between a storage modulus at 25 °C of the cured product of the photocurable resin composition and a storage modulus at 40 °C of the cured product of the photocurable resin composition is 20% or less of the storage modulus at 25 °C.

22. The photocurable resin composition according to any one of claims 1 to 21, wherein a rebound resilience modulus at 25 °C of the cured product of the photocurable resin composition is 30% or more.

23. A three-dimensional optical shaped object, comprising a photocured product of the photocurable resin composition of any one of claims 1 to 22.

24. A three-dimensional optical shaped object, comprising a cured product of a photocurable resin composition, wherein
the cured product of the photocurable resin composition has two or more glass transition points including a TgA and a TgB,
the TgA being less than 25 °C, and
the TgB being 25 °C or more,
an elongation at break in accordance with ASTM D638 of the cured product is 130% or more, and
a breaking strength in accordance with ASTM D638 of the cured product is 3 MPa or more.
